Europäisches Patentamt

European Patent Office

Office européen des brevets

(11) Publication number: **0 095 941**
**B1**

# EUROPEAN PATENT SPECIFICATION

(45) Date of publication of patent specification: **09.03.88**

(51) Int. Cl.⁴: **F 24 J 3/00,** C 09 K 5/00

(21) Application number: **83303151.1**

(22) Date of filing: **01.06.83**

(54) **Heat pump comprising an adsorbent or sorbent mass.**

(30) Priority: **02.06.82 GB 8216055**
**23.06.82 GB 8218175**

(43) Date of publication of application:
**07.12.83 Bulletin 83/49**

(45) Publication of the grant of the patent:
**09.03.88 Bulletin 88/10**

(84) Designated Contracting States:
**BE DE FR GB IT NL SE**

(56) References cited:
**EP-A-0 035 871**
**DE-A-1 619 856**
**FR-A-2 199 479**
**GB-A-1 245 349**
**GB-A-2 021 435**
**US-A-3 181 231**

(73) Proprietor: **Exxon Research and Engineering Company**
**P.O.Box 390 180 Park Avenue**
**Florham Park New Jersey 07932 (US)**

(72) Inventor: **Moss, Gerald**
**'Trevose' Sarajac Avenue East Challow**
**Wantage Oxfordshire (GB)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

## Description

This invention relates to a heat pump comprising an adsorbent or sorbent mass.

Zeolite molecular sieves which are suitable for use in adsorption heat pumps are produced as very fine powders of about 5 microns particle size. Usually these powders are pelletised and this is often achieved by the addition of 20% by weight of an inert binder. It is possible as an alternative to use pelleted zeolite molecular sieve but although easier to handle than powder it costs about four times the price of the raw material and is less reactive as an adsorbent.

Both powder and pellets suffer from two physical limitations which affect their performance in heat pumps and hence the size and costs of such devices. These limiting factors are the permeability to gaseous adsorbate and the thermal conductivity of the adsorbent.

In accordance with this invention these limitations are substantially overcome by the use of a heat pump comprising an adsorbent or sorbent mass comprising a mass of metal having open pores or interstices occupied by an adsorbent or sorbent comprising alumina, zeolite molecular sieve, activated charcoal, an alkaline earth metal halide or a mixture thereof, the adsorbent or sorbent mass having 2 to 13% by weight of metal, and the metal having a melting point greater than 400°C. The amount of metal will often be between 2 and 10 wt.% of the adsorbent or sorbent mass.

The mass of metal can take various forms but will usually be a mass of metal fibres, for example wire wool, or a metal sponge. In all cases it is essential that the pores or interstices are open so that liquid coming into contact with the mass of metal is able to penetrate substantially all of the pores or interstices.

The metal should preferably have a high conductivity and should not be corroded when it comes into contact with adsorbate, e.g. water or methyl alcohol. Preferred metals are copper, bronze, iron alloys and aluminium or its alloys. Preferably the metal should have a melting point greater than 600°C.

The shape of the mass of metal can vary but it is obviously desirable if its shape corresponds with the volume of the adsorber or sorber or tray of the adsorber or sorber which it is desired to fill with adsorbent or sorbent. In some cases it may be desirable to pack this volume with more than one individual mass of metal. If the mass of metal is flexible as in the case of wire wool, then the actual shape of the mass of metal is not of great significance.

The adsorbent or sorbent has to be alumina, a zeolite molecular sieve, an alkaline earth metal halide (e.g. chloride) or activated charcoal. The preferred adsorbent is zeolite molecular sieve and the A and Y varieties are particularly suitable. Zeolites are natural hydrated silicates of aluminium and either sodium (Y-type) or calcium (A-type) or both of the type $Na_2O \cdot Al_2O_3 \cdot n\text{-}SiO_2 \cdot xH_2O$ or an artificial ion exchanged derivative thereof. Molecular sieves are zeolites wherein the dehydrated crystals are interlaced with regularly spaced channels of molecular dimensions which comprise almost 50% of the total volume of crystals.

Although when using an alkaline earth metal halide, in certain circumstances magnesium chloride could be used for example, it is preferred to use calcium chloride.

In order to fill the pores or interstices with adsorbent or sorbent, the invention also provides a method of forming an adsorbent or sorbent mass comprising a mass of metal and adsorbent or sorbent for use in the heat pump wherein a slurry of powdered adsorbent or sorbent comprising alumina, a zeolite molecular sieve, activated charcoal, an alkaline earth metal halide (e.g. chloride) or a mixture thereof is allowed or caused to flow into a mass of metal having open pores or interstices and a melting point greater than 400°C, said mass occupying a vacuum filter (preferably of the shape and size of the desired adsorbent or sorbent mass), and the liquid of the slurry is allowed to filter through the mass of metal.

The slurry can be formed using any suitable liquid which is relatively volatile e.g. water, a monohydric alcohol, e.g. methanol a ketone, e.g. methyl ethyl ketone, or mixtures or azeotropes thereof. Usually the slurry will contain 5% to 25% by weight of adsorbent or sorbent.

When the liquid has filtered with the aid of the partial vacuum, one is left with a filter cake comprising the mass of metal impregnated with the adsorbent or sorbent. Usually, the adsorbent or sorbent is not tightly bonded to the mass of metal. If desired this cake can be dried before being transferred to an adsorber or sorber.

However, it could be advantageous to transfer the adsorbent or sorbent cake in the moist condition in order to avoid spilling of the powder. In this case it would be advantageous if the liquid used to form the slurry is the adsorbate or sorbate, e.g. water. When the adsorbent or sorbent cake is transferred to the adsorber or sorber in the moist condition it will be dried out during the first operating cycle.

When subjected to heat in the adsorber or sorber, the porous metal or metal fibres will expand and this may well produce extensive cracking. This will be an advantage because the channels opened up in this way will enhance the permeability of the cake to gaseous adsorbate or sorbate and so increase the maximum available output of any heat pump of which the adsorber forms a part.

In order to obtain the best thermal conductivity it is preferable if the fibres of wire wool are bonded to the plate, e.g. metal plate, which supplies heat to the sorbent substantially at right angles thereto, i.e. rather like the bristles of a brush. Accordingly when carrying out the method of the invention using wire wool, it is preferable if the skeins of wire wool are folded like a concertina with the bulk of the loops located substantially at right angles to the plate which will ultimately supply heat to the adsorbent or sorbent mass. The slurry is then allowed to flow into the wire wool as previously described.

The adsorbent mass is used in an adsorber. In such adsorbers the adsorbent adsorbs adsorbate with the evolution of heat. To desorb the adsorbate external heat must be applied to the adsorbent mass.

The advantages of using the adsorbent or sorbent mass are, that compared with previously used adsorbents or sorbents, the thermal conductivity is greatly improved and one can use smaller particles and hence improve the rate of adsorption. The result is that the heat can be removed faster and when used in a heat pump there is a higher temperature lift.

Processes and apparatus where adsorbers are used and where the adsorbent mass of this invention could be used include GB—A—2081875, GB—A—2083905, GB—A—2088546, GB—A—2091411 and GB—A—2088548.

GB—A—2081875 claims a heat storage system comprising a source of heat capable of supplying heat directly or indirectly to a first heat exchanger and to the load, an adsorber capable of exchanging heat with the first heat exchanger, a heat of fusion heat store and a valved conduit connecting the adsorber with the heat of fusion heat store.

GB—A—2083905 claims a process of storing heat wherein a vapour compression system heats an adsorbate housed in a heat of fusion heat store whilst adsorbate vapour is stripped from adsorbent in an adsorber, compressed (the compressed adsorbate supplying heat to the adsorbent), condensed and expanded and sent to liquid adsorbate in the heat of fusion heat store.

GB—A—2088546 claims a heating system wherein solar energy is used to supply heat to a heat of fusion heat store, adsorbate is stripped from adsorbent in an adsorber and thereafter condensed, the heat of condensation being delivered to the load, condensed adsorbate is sent to an evaporator, adsorbate is vaporised in the evaporator and vaporised adsorbate is adsorbed in the adsorber, the heat of adsorption being delivered to the load.

GB—A—2091411 claims a combined adsorption and absorption process in which an external source of heat is used to desorb adsorbate from adsorbent housed in an adsorber. The adsorbate vapour is condensed and the latent heat of condensation used to remove absorbate from the working fluid in the generator of an absorption system.

GB—A—2088548 claims a method of obtaining heat wherein adsorbate is evaporated from an evaporator and thereafter adsorbed by an adsorbent in an adsorber, the latent heat of adsorption providing heat to the load and thereafter the adsorbate is desorbed from the adsorbent and desorbed adsorbate condensed in a heat of fusion heat store and the substance housed therein melting and thereafter solidifying, the latent heat of fusion providing heat to the load.

## Example

4A zeolite molecular sieve powder was poured into a measuring cylinder and was found to give a packing factor of 0.60, packing factor being the proportion of the total volume occupied by the relevant material, i.e. by 4A zeolite in this case. A skein of copper wire wool was measured and weighed and was found to have a packing factor of 0.027. Some of the copper wire wool was put into a beaker where it had a packing factor of 0.0102. A slurry of 10% of zeolite in water was then poured into the beaker and allowed to settle. The supernatant water was then decanted and the process was repeated until the copper wool was submerged by settled zeolite. The water was then evaporated by heating the heater to 300°C and allowing it to cool in a closed container. It was then weighted and it was established that the packing factor of the zeolite in the free volume was 0.60. On a weight basis the matrix contained 12.7% by weight of copper.

## Claims

1. A heat pump comprising an adsorbent or sorbent mass comprising a mass of metal having open pores or interstices occupied by an adsorbent or sorbent comprising alumina, zeolite molecular sieve, activated charcoal, an alkaline earth metal halide or a mixture thereof, the adsorbent or sorbent mass having 2 to 13% by weight of metal and the metal having a melting point greater than 400°C.

2. A heat pump according to claim 1 wherein the mass of metal comprises metal fibres.

3. A heat pump according to claim 1 or claim 2 wherein the metal has a melting point of more than 600°C.

4. A heat pump according to any one of claims 1 to 3 wherein the adsorbent is A or Y zeolite molecular sieve.

5. A heat pump according to any one of claims 1 to 3 wherein the alkaline earth metal halide is calcium chloride.

6. A heat pump according to any one of claims 1 to 5 wherein the mass contains 2 to 10% by weight of metal.

7. A method of forming the adsorbent or sorbent mass used in the heat pump of any one of claims 1 to 6 wherein a slurry of powdered adsorbent or sorbent comprising alumina, a zeolite molecular sieve, activated charcoal, an alkaline earth metal halide or a mixture thereof is allowed or caused to flow into a mass of metal having open pores or interstices, and a melting point greater than 400°C, said mass occupying a vacuum filter and the liquid of the slurry is allowed to filter through the mass of metal.

8. A method according to claim 7 wherein the slurry contains from 5 to 25% by weight of adsorbent or sorbent.

9. A heat pump comprising an adsorbent or sorbent mass made by the method of claim 7 or claim 8.

**Patentansprüche**

1. Wärmepumpe, die eine Adsorbens- oder Sorbensmasse aufweist, die eine Metallmasse mit offenen Poren oder Hohlräumen umfaßt, die von einem Adsorbens oder Sorbens eingenommen werden, das Aluminiumoxid, Zeolith-Molekularsieb, Aktivkohle, ein Erdalkalimetallhalogenid oder eine Mischung derselben umfaßt, wobei die Adsorbens- oder Sorbensmasse 2 bis 13 Gew.% Metall hat und das Metall einen Schmelzpunkt von mehr als 400°C besitzt.

2. Wärmepumpe nach Anspruch 1, dadurch gekennzeichnet, daß die Metallmasse Metallfasern umfaßt.

3. Wärmepumpe nach Anspruch 1 oder 2, dadurch gekennzeichnet, daß das Metall einen Schmelzpunkt von mehr als 600°C besitzt.

4. Wärmepumpe nach einem der Ansprüche 1 bis 3, dadurch gekennzeichnet, daß das Adsorbens A oder Y Zeolith-Molekularsieb ist.

5. Wärmepumpe nach einem der Ansprüche 1 bis 3, dadurch gekennzeichnet, daß das Erdalkalimetallhalogenid Calciumchlorid ist.

6. Wärmepumpe nach einem der Ansprüche 1 bis 5, dadurch gekennzeichnet, daß die Masse 2 bis 10 Gew.% Metall enthält.

7. Verfahren zur Herstellung der in der Wärmepumpe gemäß einem der Ansprüche 1 bis 6 verwendeten Adsorbens- oder Sorbensmasse, dadurch gekennzeichnet, daß eine Aufschlämmung aus gepulvertem Adsorbens oder Sorbens, das Aluminiumoxid, ein Zeolith-Molekularsieb, Aktivkohle, ein Erdalkalimetallhalogenid oder eine Mischung derselben umfaßt, in eine Metallmasse mit offenen Poren oder Hohlräumen und einem Schmelzpunkt von mehr als 400°C einfließen gelassen wird, wobei die Masse einen Vakuumfilter ausfüllt und die Flüssigkeit der Aufschlämmung durch die Metallmasse filtrieren gelassen wird.

8. Verfahren nach Anspruch 7, dadurch gekennzeichnet, daß die Aufschlämmung 5 bis 25 Gew.% Adsorbens oder Sorbens enthält.

9. Wärmepumpe, die eine Adsorbens- oder Sorbensmasse hergestellt nach dem Verfahren gemäß Anspruch 7 oder 8 enthält.

**Revendications**

1. Pompe à chaleur comprenant une masse adsorbante ou sorbante comprenant une masse de métal ayant des pores ou interstices ouverts occupés par un adsorbant ou un sorbant comprenant de l'alumine, un tamis moléculaire de type zéolite, du charbon activé, un halogénure de métal alcalinoterreux ou un de leurs mélanges, la masse adsorbante ou sorbante comprenant 2 à 13% en poids de métal et le métal ayant un point de fusion supérieur à 400°C.

2. Pompe à chaleur selon la revendication 1, dans laquelle la masse de métal comprend des fibres métalliques.

3. Pompe à chaleur selon la revendication 1 ou 2, dans laquelle le métal a un point de fusion supérieur à 600°C.

4. Pompe à chaleur selon l'une quelconque des revendications 1 à 3, dans laquelle l'adsorbant est un tamis moléculaire de type zéolite A ou Y.

5. Pompe à chaleur selon l'une quelconque des revendications 1 à 3, dans laquelle l'halogénure de métal alcalino-terreux est du chlorure de calcium.

6. Pompe à chaleur selon l'une quelconque des revendications 1 à 5, dans laquelle la masse contient 2 à 10% en poids de métal.

7. Procédé de formation de la masse adsorbante ou sorbante utilisée dans la pompe à chaleur selon l'une quelconque des revendications 1 à 6, dans lequel on laisse ou on fait couler une suspension d'adsorbant ou de sorbant pulvérisé comprenant de l'alumine, un tamis moléculaire de type zéolite, du charbon activé, un halogénure de métal alcalino-terreux ou un de leurs mélanges, dans une masse de métal ayant des pores ou interstices ouverts, et un point de fusion supérieur à 400°C, ladite masse occupant un filtre à vide et le liquide de la suspension pouvant filtrer à travers la masse de métal.

8. Procédé selon la revendication 7, caractérisé en ce que la suspension contient de 5 à 25% en poids d'adsorbant ou de sorbant.

9. Pompe à chaleur comprenant une masse adsorbante ou sorbante préparée par le procédé selon la revendication 7 ou 8.